# FASCICULE DE BREVET EUROPEEN

(11) **EP 1 480 001 B1**
(45) Date de publication et mention de la délivrance du brevet: **23.02.2011**
(21) Numéro de dépôt: 04291287.3
(22) Date de dépôt: 19.05.2004
(51) Int. Cl.: F41H 3/02, F41H 3/00

(54) **Dispositif de masquage aux infrarouges d'une roue et véhicule équipé de ce dispositif**
Infrarottarnvorrichtung für das Rad eines Fahrzeuges und Fahrzeug mit dieser Vorrichtung
Device for concealing infrared radiation of the wheels and a vehicle comprising this device

(30) Priorité: 23.05.2003 FR 0306240
(43) Date de publication de la demande: 24.11.2004
(73) Titulaire: MBDA France, 75016 Paris (FR)
(72) Inventeur: Hembise, Dominique, 78370 Plaisir (FR)
(74) Mandataire: Garel, Régis

(56) Documents cités:
- CH-A- 664 008
- DE-A- 4 021 635
- GB-A- 2 326 221
- US-A- 4 021 974

## Description

La présente invention se rapporte à un dispositif de masquage aux infrarouges d'une roue de véhicule. Plus particulièrement, l'invention se rapporte à un dispositif de masquage d'une roue équipée d'un pneumatique qui présente un flanc orienté vers l'extérieur du véhicule et à l'utilisation de ce dispositif pour masquer les roues d'un véhicule porteur d'un système de déminage.

Un dispositif de masquage de chénilles est décrit dans DE 4021635.

Parmi les différents types de mines existantes, certains types de mines comportent un détecteur sensible aux rayonnements infrarouges, qui déclenche l'explosion de la mine lorsqu'une source de chaleur passe à proximité de celle-ci. Les mines de ce type sont généralement disposées sur les bas-côtés d'une route, de manière à ce que l'axe de visée du détecteur infrarouges soit orienté vers la route à hauteur de véhicule, par exemple entre 50 cm et 1 m. Lors du passage d'un véhicule, le détecteur infrarouges reconnaît la présence d'une source de chaleur, comme par exemple le moteur ou le circuit d'échappement du véhicule, et déclenche l'explosion de la mine.

Le moteur et la ligne d'échappement d'un véhicule peuvent être relativement facilement masqués par des isolants thermiques, mais ils ne constituent pas les seules sources de chaleur visibles de l'extérieur. En effet, les pneumatiques des roues du véhicule peuvent aussi former une source de chaleur facilement détectable, car la déformation répétée du flanc du pneumatique lors de sa rotation entraîne une élévation de la température de celui-ci. Cette élévation de température apparaît généralement sur les véhicules roulant à une vitesse relativement importante, mais la demanderesse a constaté que les flancs d'un pneumatique basse pression, c'est-à-dire gonflé avec une pression nominale inférieure à 0,5 bar, et roulant à faible vitesse, inférieure à 25 km/h, pouvaient s'échauffer de manière importante et atteindre une température supérieure de 50 °C à la température ambiante.

Ces roues basse pression sont notamment utilisées pour les véhicules porteurs destinés à supporter, tracter ou pousser différents leurres adaptés pour déclencher différents types de mines. Or, le fonctionnement optimal d'un système de déminage, constitué par des leurres et un véhicule porteur, nécessite que la signature infrarouge du véhicule porteur soit la plus réduite possible.

La présente invention a donc pour but de fournir un dispositif permettant de réduire la signature infrarouge d'une roue de véhicule, en proposant un dispositif de masquage qui puisse être adapté sur la roue d'un véhicule existant, sans dégrader les performances du véhicule et notamment, sans réduire son rayon de braquage. De plus, ce dispositif doit être suffisamment résistant et pratique pour pouvoir être utilisé dans les conditions sévères que l'on peut rencontrer sur un terrain d'opérations militaires.

A cet effet, l'invention a pour objet un dispositif de masquage aux infrarouges d'une roue de véhicule équipée d'un pneumatique présentant un flanc orienté vers l'extérieur du véhicule, caractérisé en ce qu'il comprend une brosse de forme annulaire plane présentant une périphérie extérieure, une périphérie intérieure et comportant des poils agencés radialement, et un dispositif de fixation relié à la périphérie intérieure de la brosse, qui est adapté pour maintenir la brosse coaxialement par rapport à la roue et en regard du flanc extérieur du pneumatique.

Ainsi, la brosse forme un écran aux rayonnements infrarouges émis par le flanc du pneumatique vers l'extérieur du véhicule, ce qui diminue la signature infrarouge du véhicule. L'air circulant autour de la brosse et à travers les poils de la brosse lors du déplacement du véhicule permet de maintenir celle-ci à une température très proche de la température ambiante. De ce fait, le dispositif de masquage selon l'invention ne nécessite pas l'emploi de matériaux particuliers possédant de bonnes propriétés d'isolation thermique. D'autre part, l'encombrement de la brosse est moins important que celui d'un carter couvrant la roue et la brosse peut se déformer si elle vient en contact avec un obstacle du terrain ou une partie du véhicule, notamment lors du braquage des roues.

Dans des formes de réalisation préférée de l'invention, on a recours, en outre, à l'une et/ou à l'autre des dispositions suivantes :
- les poils de la brosse présentent une rigidité adaptée pour que les poils demeurent naturellement rectilignes, ainsi l'écran formé par la brosse demeure en regard du flanc de la roue même lorsque celle-ci n'est pas entraînée en rotation ;
- la brosse présente une épaisseur comprise entre 20 et 60 mm ;
- les poils de la brosse présentent une longueur sensiblement égale à la hauteur du flanc du pneumatique ;
- les poils de la brosse sont en polymère et de préférence en polyamide, pour résister aux intempéries ;
- la brosse comprend au moins deux brosses élémentaires de forme annulaire plane, agencées coaxialement et adjacentes l'une à l'autre ;
- le dispositif de fixation est adapté pour ménager un espace libre entre le flanc extérieur du pneumatique et la brosse, cet espace étant de préférence compris entre 40 et 60 mm ;
- le dispositif de fixation comporte un écran agencé coaxialement à la brosse, qui présente une face extérieure de dimension adaptée pour couvrir au moins l'espace défini par la périphérie intérieure de la brosse ;
- l'écran est en matériau composite à faible émissivité dans le domaine infrarouge ;
- la roue du véhicule comporte des goujons, et le dispositif de fixation comprend une platine et une contre-platine entre lesquelles la périphérie intérieure de la brosse est serrée, ladite platine présentant des orifices adaptés pour être traversés par les goujons de la roue.

Par ailleurs, l'invention a également pour objet un véhicule comprenant au moins une paire de roues équipées d'un dispositif de masquage tel que défini précédemment, et l'utilisation dudit dispositif pour masquer les roues à pneumatique d'un véhicule porteur d'un système de déminage, dont la pression nominale de gonflage des pneumatiques est inférieure à 0,5 bar.

D'autres caractéristiques et avantages de l'invention apparaîtront au cours de la description qui va suivre, donnée à titre d'exemple non limitatif, en référence aux dessins annexés dans lesquels :
- la figure 1 est une vue partielle en perspective d'un véhicule comprenant des roues équipées d'un dispositif de masquage aux infrarouges selon l'invention ;
- la figure 2 est une vue agrandie éclatée du dispositif de masquage représenté à la figure 1.

Sur les différentes figures, on a conservé les mêmes références pour désigner des éléments identiques ou similaires.

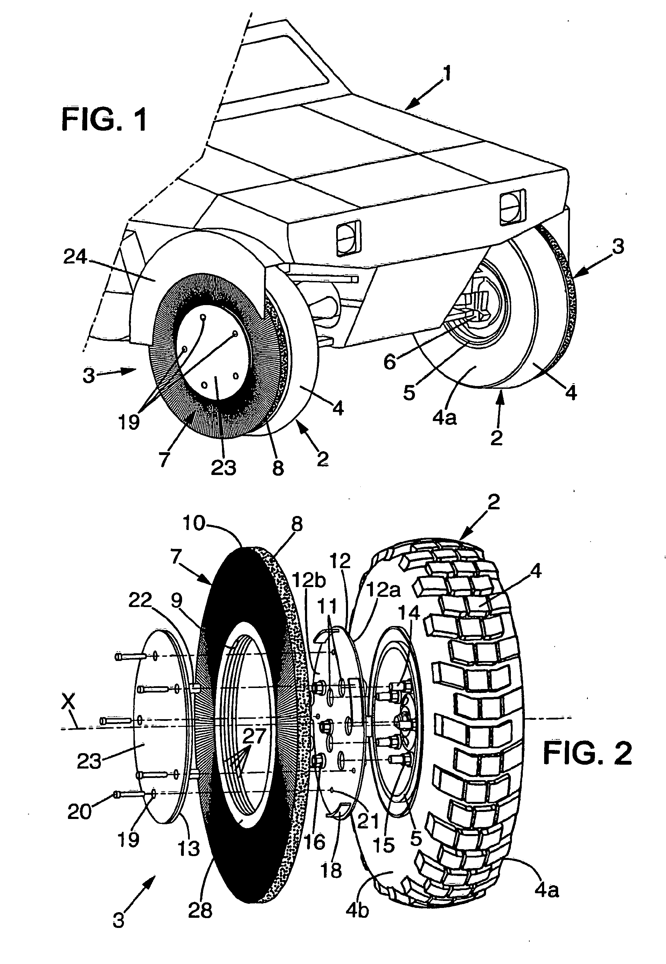

La figure 1 représente un véhicule 1 dont les roues 2 comportent un dispositif de masquage aux infrarouges 3. Chaque roue et équipée d'un pneumatique 4 monté sur une jante 5, elle-même montée sur un moyeu 6 du véhicule. Les roues 2 sont destinées à tourner autour d'un axe X visible sur la figure 2.

Le pneumatique 4 présente deux flancs latéraux, un flanc intérieur 4a qui fait face à la caisse du véhicule et un flanc extérieur 4b orienté vers l'extérieur du véhicule. Lors de la rotation de la roue, les flancs 4a et 4b du pneumatique sont régulièrement déformés au niveau du point d'appui du pneumatique avec le sol, ce qui provoque un échauffement des flancs proportionnel à la vitesse de rotation de la roue et inversement proportionnel à la pression de gonflage du pneumatique. On notera que pour des véhicules équipés de pneumatiques basse pression, dont la pression de gonflage nominale est inférieure ou égale à 0,5 bar, la déformation que subissent les flancs du pneumatique est très importante et ceci entraîne une élévation importante de la température du flanc, même si le véhicule roule à une vitesse relativement faible, de l'ordre de 25 km/h.

Le dispositif de masquage 3 comprend une brosse 7 qui présente globalement la forme d'un anneau plat. La brosse 7 est formée de poils 8 qui s'étendent radialement entre une périphérie intérieure 9 et une périphérie extérieure 10.

Comme cela est mieux visible sur la figure 2, le dispositif de masquage 3 comporte également un dispositif de fixation comprenant, dans le mode de réalisation représenté, une platine circulaire 12 et une contre-platine 13.

La platine 12 comporte des orifices 11 disposés en regard de goujons 14 servant au montage de la jante 5 sur le moyeu 6 du véhicule, de manière à monter la platine circulaire 12 coaxialement à l'axe X de la roue et parallèlement au plan moyen de la roue. On notera que les goujons 14 ont une longueur relativement importante de manière à présenter une portion filetée dépassant vers l'extérieur lorsque la roue 2 est montée sur le moyeu à l'aide des boulons 15.

Une fois la platine 12 engagée sur les goujons 14, la face intérieure 12a de celle-ci est maintenue en appui contre les boulons 15 et/ou la jante 5, à l'aide d'un jeu de boulons supplémentaires 16. Cette fixation de la platine présente l'avantage de permettre le montage et le démontage du dispositif de masquage 3 sans avoir à démonter la roue elle-même.

La platine 12 comporte une face extérieure 12b qui présente des reliefs saillants 18 en arc de cercle. Les reliefs 18 sont disposés selon un diamètre sensiblement égal au diamètre de la périphérie intérieure 9 de la brosse 7 et centré sur l'axe X de la roue.

La contre-platine 13 a la forme d'un disque de diamètre sensiblement égal ou supérieur au diamètre de la platine 12. La contre-platine 13 présente des trous traversants 19 à travers lesquels peuvent être glissées des vis de fixation 20 qui viennent s'engager dans des trous taraudés 21 formés dans la platine 12 en regard des trous traversés 19 de la contre-platine.

La brosse 7 est disposée coaxialement à l'axe X grâce aux reliefs 18 de la platine et elle est maintenue en place par le serrage, à l'aide des vis 20, de la contre-platine 13 sur la platine 12. On notera que la contre-platine 13 peut comporter sur sa face orientée vers la roue des entretoises 22, de manière à limiter l'écrasement de la périphérie intérieure de la brosse entre la platine 12 et la contre-platine 13.

Grâce au dispositif de fixation décrit ci-dessus, la brosse 7 est fixée coaxialement à la roue 2 et en regard du flanc extérieur 4b du pneumatique. Mais bien entendu, il est possible d'envisager d'autres dispositifs de fixation adaptés pour agencer de cette manière la brosse par rapport à la roue. On peut notamment envisager un dispositif de fixation qui autoriserait une rotation de la brosse 7 par rapport à la roue 2, sans sortir du cadre de la présente invention.

Ainsi montée, la brosse 7 masque les rayonnements infrarouges susceptibles d'être émis par le flanc 4b du pneumatique vers l'extérieur du véhicule. En effet, les poils 8 de la brosse constituent un obstacle pour la propagation des rayonnements infrarouges ; de plus, l'air emprisonné entre les poils ou circulant à travers ceux-ci lorsque la brosse 7 est entraînée en rotation avec la roue, permet de maintenir la brosse à une température très proche de la température ambiante.

Toutefois, afin d'éviter la transmission de chaleur depuis le flanc extérieur 4b du pneumatique vers la brosse 7, il est préférable que le dispositif de fixation soit adapté pour ménager un espace libre entre ces éléments. Cet espace peut être compris entre 20 et 60 mm, en fonction de l'importance de la déformation des flancs du pneu au point de contact avec le sol, et selon que l'on tolère plus ou moins un contact entre la brosse et la portion angulaire déformée du pneu. Cet espacement entre la brosse 7 et le flanc extérieur du pneu 4b peut être obtenu en prévoyant des entretoises sur la face intérieure 12a de la platine du dispositif de fixation.

Dans le but de garantir une signature infrarouge minimum de la roue, le dispositif de fixation comporte un écran 23 agencé coaxialement à la brosse 7, qui présente une face extérieure de dimension adaptée pour couvrir au moins l'espace défini par la périphérie intérieure 9 de la brosse 7. L'écran peut être formé par un disque monté sur le dispositif de fixation par l'intermédiaire de supports thermiquement isolants ou, comme dans le mode de réalisation préféré représenté à la figure 2, l'écran 23 peut être composé d'une couche en matériau composite à faible émissivité dans le domaine infrarouge qui recouvre la face extérieure de la contre-platine 13. Ainsi, si une source de chaleur est présente à proximité du moyeu 6 de la roue, comme par exemple un frein à disque ou à tambour, la chaleur qui peut être transmise au dispositif de fixation à travers les goujons 14 et/ou la jante 5 ne sera pas visible depuis l'extérieur du véhicule. On notera que ce but peut être également atteint avec une contre-platine réalisée en matériau composite à faible émissivité dans le domaine infrarouge.

Il est préférable que la brosse 7 présente une épaisseur, mesurée selon l'axe X, d'au moins 20 mm, afin de garantir qu'aucun rayonnement infrarouge ne passe à travers les poils 8. Bien entendu, l'épaisseur de la brosse peut être plus importante, mais il est préférable qu'elle ne dépasse pas 60 mm afin de ne pas augmenter excessivement l'encombrement axial du dispositif de masquage et d'éviter tout contact permanent avec un élément de carrosserie du véhicule, même s'il s'agit d'une bavette souple 24 destinée à former un écran anti-projections.

Il est envisageable d'utiliser des poils souples, comme par exemple des fibres textiles, qui pourraient s'étendre de manière rectiligne selon la direction radiale de la brosse lorsqu'elle est entraînée en rotation par la roue. Toutefois, il est préférable que les poils 8 présentent une certaine rigidité pour demeurer naturellement rectilignes. Cette disposition permet à la périphérie extérieure 10 de la brosse 7 de conserver un diamètre constant, même lorsque le véhicule est à l'arrêt ou roule à faible vitesse. Bien entendu, les poils doivent présenter une certaine élasticité pour reprendre une forme sensiblement rectiligne après avoir rencontré un obstacle du sol ou après avoir touché une partie du véhicule.

Des poils répondant à ces caractéristiques peuvent être avantageusement réalisés à moindre coût en matière polymère. On peut utiliser différents types de polymères en fonction de leur résistance aux intempéries et de leur résistance mécanique. Les polymères de la famille des polyamides, comme par exemple le PA 10/6 ou le Rilsan® commercialisé par ATOFINA, sont particulièrement indiqués pour leur résistance. En effet, le dispositif de masquage est destiné à être utilisé sur des terrains militaires dans des conditions climatiques qui peuvent être extrêmes, et il doit résister à des traitements assez agressifs comme par exemple un lavage par nettoyeur haute pression.

La longueur des poils 8 de la brosse est sensiblement égale à la hauteur du flanc du pneumatique, afin que la brosse 7 couvre entièrement le flanc. Ceci permet de rouler avec un pneumatique complètement dégonflé sans endommager le dispositif de fixation. Toutefois, il est envisageable que le dispositif de fixation muni de l'écran 23 présente un diamètre supérieur de manière à couvrir en partie le flanc 4b du pneumatique.

La brosse 7 peut être constituée de plusieurs brosses élémentaires 27, de forme annulaire plane, qui sont disposées coaxialement les unes à côté des autres sur le dispositif de fixation de manière à former une seule brosse 7 d'épaisseur suffisante. Ce mode de réalisation est particulièrement économique car chaque brosse élémentaire 27 peut être réalisée à l'aide du procédé connu décrit ci-après. Ce procédé consiste à disposer les poils dans un profilé en V constitué d'une tôle métallique 28 puis à refermer le profilé en V de manière à obtenir un profilé en U qui enserre la base des poils. Ensuite, la tôle 28 formant le profilé peut assez aisément être courbée de manière à obtenir la forme annulaire de la brosse élémentaire 27, dont l'épaisseur est généralement inférieure à 1 cm. En disposant de manière adjacente quatre brosses élémentaires 27 ainsi réalisées, on obtient la brosse 7 qui présente une épaisseur comprise entre 20 et 60 mm.

Le dispositif de masquage décrit ci-dessus peut être monté sur toutes les roues d'un véhicule existant sans nécessiter de modification importante de celui-ci si ce n'est, éventuellement, le montage de goujons 14 de longueur supérieure aux goujons d'origine. Il est aussi possible de monter les brosses de masquage 7 uniquement sur la paire de roues directrices du véhicule et de masquer les roues des essieux non directionnels avec des plaques rigides.

Il est particulièrement intéressant d'utiliser le dispositif de masquage selon l'invention pour diminuer la signature infrarouge des roues d'un véhicule porteur d'un système de déminage. En effet, il existe des systèmes de déminage constitués de leurres aptes à déclencher différents types de mines qui sont tractés ou poussés par un véhicule porteur. Les leurres sont conçus pour résister à l'explosion des mines, ou du moins pour être facilement remis en état. Par contre, le véhicule porteur qui comporte un groupe motopropulseur et des systèmes électroniques permettant de le commander à distance, ne doit pas subir directement l'explosion des mines. Aussi, le véhicule porteur est conçu de manière à ne pas être détecté par les différents systèmes de déclenchement de mines. Dans ce but, le véhicule porteur présente notamment des roues de grand diamètre, pouvant atteindre 2 m, dont les pneumatiques sont gonflés à une basse pression, inférieure à 0,5 bar, ce qui permet de répartir la pression exercée sur le sol par le poids du véhicule et d'éviter le déclenchement des mines comportant des capteurs de pression. Toutefois, les flancs de tels pneumatiques voient leur température s'élever de manière assez importante, même si le véhicule porteur roule lentement. Dans ce cas, le dispositif de masquage selon l'invention permet de diminuer la signature infrarouge des roues. De plus, il présente l'avantage de ne pas augmenter la prise au souffle du véhicule porteur lors de l'explosion des mines déclenchées par le système de leurrage, et ce contrairement à un dispositif de masquage qui serait composé de capots ou de plaques rigides.

## Revendications

1. Dispositif de masquage aux infrarouges d'une roue (2) de véhicule équipée d'un pneumatique (4) présentant un flanc (4b) orienté vers l'extérieur du véhicule, **caractérisé en ce qu'**il comprend une brosse (7) de forme annulaire plane présentant une périphérie extérieure (10), une périphérie intérieure (9) et comportant des poils (8) agencés radialement, et un dispositif de fixation (12, 13) relié à la périphérie intérieure de la brosse et destiné à être fixé sur la roue du véhicule, qui est adapté pour maintenir la brosse coaxialement par rapport à ladite roue et en regard du flanc extérieur (4b) du pneumatique.

2. Dispositif de masquage selon la revendication 1, dans lequel les poils (8) de la brosse (7) présentent une rigidité adaptée pour que les poils demeurent naturellement rectilignes.

3. Dispositif de masquage selon la revendication 1, dans lequel la brosse (7) présente une épaisseur comprise entre 20 et 60 mm.

4. Dispositif de masquage selon l'une quelconque des revendications 1 à 3, dans lequel les poils (8) de la brosse (7) présentent une longueur sensiblement égale à la hauteur du flanc (4b) du pneumatique.

5. Dispositif de masquage selon l'une quelconque des revendications 1 à 4, dans lequel les poils (8) de la brosse sont en polymère et de préférence en polyamide.

6. Dispositif de masquage selon l'une quelconque des revendications 1 à 5, dans lequel la brosse comprend au moins deux brosses élémentaires (27) de forme annulaire plane, agencées coaxialement et adjacentes l'une à l'autre.

7. Dispositif de masquage selon l'une quelconque des revendications 1 à 6, dans lequel le dispositif de fixation (12, 13) est adapté pour ménager un espace libre entre le flanc extérieur (4b) du pneumatique et la brosse (7), cet espace étant de préférence compris entre 20 et 60 mm.

8. Dispositif de masquage selon l'une quelconque des revendications 1 à 7, dans lequel le dispositif de fixation (12, 13) comporte un écran (23) agencé coaxialement à la brosse, qui présente une face extérieure de dimension adaptée pour couvrir au moins l'espace défini par la périphérie intérieure (9) de la brosse (4).

9. Dispositif de masquage selon la revendication 8, dans lequel l'écran (23) est en matériau composite à faible émissivité dans le domaine infrarouge.

10. Dispositif de masquage d'une roue de véhicule comportant des goujons (14), et selon l'une quelconque des revendications 1 à 9, dans lequel le dispositif de fixation comprend une platine (12) et une contre-platine (13) entre lesquelles la périphérie intérieure (9) de la brosse est serrée, ladite platine présentant des orifices (11) adaptés pour être traversés par les goujons de la roue.

11. Véhicule comprenant des roues (2) équipées de pneumatiques (4), **caractérisé en ce qu'**au moins une paire de roues est équipée d'un dispositif de masquage aux infrarouges, selon l'une quelconque des revendications 1 à 10.

12. Utilisation d'un dispositif de masquage aux infrarouges selon l'une quelconque des revendications 1 à 10 pour masquer les roues à pneumatique (2) d'un véhicule porteur d'un système de déminage, dont la pression nominale de gonflage des pneumatiques est inférieure à 0,5 bar.

## Claims

1. Device for concealing infrared radiation of the wheel (2) of a vehicle provided with a tyre (4) having a flank (4b) oriented towards the exterior of the vehicle, **characterised in that** it comprises a brush (7) of planar annular shape having an outside periphery (10), an inside periphery (9) and comprising bristles (8) arranged radially, and a device for fastening (12, 13) connected to the inside periphery of the brush and intended to be fixed on the wheel of the vehicle, which is adapted to maintain the brush coaxially in relation to said wheel and across from the outside flank (4b) of the tyre.

2. Device for concealing according to claim 1, wherein the bristles (8) of the brush (7) have a rigidity that is adapted so that the bristles remain naturally rectilinear.

3. Device for concealing according to claim 1, wherein the brush (7) has a thickness between 20 and 60 mm.

4. Device for concealing according to any of claims 1 to 3, wherein the bristles (8) of the brush (7) have a length that is substantially equal to the height of the flank (4b) of the tyre.

5. Device for concealing according to any of claims 1 to 4, wherein the bristles (8) of the brush are made of polymer and more preferably of polyamide.

6. Device for concealing according to any of claims 1 to 5, wherein the brush comprises at least two basic brushes (27) of planar annular shape, arranged coaxially and adjacent to one another.

7. Device for concealing according to any of claims 1 to 6, wherein the device for fastening (12, 13) is adapted to create a free space between the outside flank (4b) of the tyre and the brush (7), with this space being more preferably between 20 and 60 mm.

8. Device for concealing according to any of claims 1 to 7, wherein the device for fastening (12, 13) comprises a screen (23) arranged coaxially to the brush, which has an outside face of a dimension adapted to cover at least the space defined by the inside periphery (9) of the brush (4).

9. Device for concealing according to claim 8, wherein the screen (23) is made of a composite material with low emissivity in the infrared range.

10. Device for concealing of a wheel of a vehicle comprising lug studs (14), and according to any of claims 1 to 9, wherein the device for fastening comprises a plate (12) and a counterplate (13) between which the inside periphery (9) of the brush is tightened, said plate having orifices (11) adapted to be crossed by the lug studs of the wheel.

11. Vehicle comprising wheels (2) provided with tyres (4), **characterised in that** at least one pair of wheels is provided with a device for concealing infrared radiation, according to any of claims 1 to 10.

12. Usage of a device for concealing infrared radiation according to any of claims 1 to 10 for concealing the tyres (2) of a vehicle carrying a mineclearing system, of which the nominal inflation pressure of the tyres is less than 0.5 bar.

## Patentansprüche

1. Vorrichtung zur Verdeckung eines Rades (2) eines Fahrzeugs im Infraroten, wobei das Rad mit einem Reifen (4) ausgestattet ist, der eine Flanke (4b) aufweist, die zu dem Äußeren des Fahrzeugs gerichtet ist, **dadurch gekennzeichnet, dass** die Vorrichtung eine ringförmige ebene Bürste (7), die einen Außenumfang (10) und einen Innenumfang (9) aufweist und radial angeordnete Borsten (8) umfasst, und eine mit dem Innenumfang der Bürste verbundene Befestigungsvorrichtung (12, 13) umfasst, die dazu bestimmt ist, an dem Rad des Fahrzeugs befestigt zu sein, und die dazu angepasst ist, die Bürste koaxial in Bezug auf das Rad und in Hinblick auf die Außenflanke (4b) des Reifens zu halten.

2. Vorrichtung zur Verdeckung nach Anspruch 1, wobei die Borsten (8) der Bürste (7) eine Steifigkeit aufweisen, welche so angepasst ist, dass die Borsten naturgemäß geradlinig bleiben.

3. Vorrichtung zur Verdeckung nach Anspruch 1, wobei die Bürste (7) eine Dicke zwischen 20 und 60 mm aufweist.

4. Vorrichtung zur Verdeckung nach einem der Ansprüche 1 bis 3, wobei die Borsten (8) der Bürste (7) eine Länge aufweisen, die im Wesentlichen gleich der Höhe der Flanke (4b) des Reifens ist.

5. Vorrichtung zur Verdeckung nach einem der Ansprüche 1 bis 4, wobei die Borsten (8) der Bürste aus Polymer und vorzugsweise aus Polyamid sind.

6. Vorrichtung zur Verdeckung nach einem der Ansprüche 1 bis 5, wobei die Bürste wenigstens zwei ringförmige ebene Elementarbürsten (27) umfasst, die koaxial und einander benachbart angeordnet sind.

7. Vorrichtung zur Verdeckung nach einem der Ansprüche 1 bis 6, wobei die Befestigungsvorrichtung (12, 13) dazu angepasst ist, eine freie Lücke zwischen der Außenflanke (4b) des Reifens und der Bürste (7) vorzusehen, wobei diese Lücke vorzugsweise zwischen 20 und 60 mm beträgt.

8. Vorrichtung zur Verdeckung nach einem der Ansprüche 1 bis 7, wobei die Befestigungsvorrichtung (12, 13) einen koaxial mit der Bürste angeordneten Schirm (23) umfasst, der eine Außenseite mit Abmaßen aufweist, die dazu angepasst sind, wenigstens die durch den Innenumfang (9) der Bürste (4) definierte Lücke zu bedecken.

9. Vorrichtung zur Verdeckung nach einem der Ansprüche 1 bis 8, wobei der Schirm (23) aus einem Kompositmaterial mit im Infrarotbereich schwacher Emissivität ist.

10. Vorrichtung zur Verdeckung eines Rades eines Fahrzeugs, umfassend Bolzen (14) und nach einem der Ansprüche 1 bis 9, wobei die Befestigungsvorrichtung eine Platte (12) und eine Gegenplatte (13) umfasst, zwischen denen der Innenumfang (9) der Bürste geklemmt ist, wobei die Platte Öffnungen (11) aufweist, die dazu angepasst sind, von den Bolzen des Rades durchsetzt zu werden.

11. Fahrzeug, umfassend mit Reifen (4) ausgestattete Räder (2), **dadurch gekennzeichnet, dass** wenigstens ein Paar von Rädern mit einer Vorrichtung zur Verdeckung im Infraroten nach einem der Ansprüche 1 bis 10 ausgestattet ist.

12. Verwendung einer Vorrichtung zur Verdeckung im Infraroten nach einem der Ansprüche 1 bis 10 zum Verdecken der mit Reifen ausgestatteten Räder (2) eines Trägerfahrzeugs für ein Minenräumsystem, wobei der Nominalaufpumpdruck der Reifen kleiner als 0,5 bar ist.
